# EUROPÄISCHE PATENTSCHRIFT

(11) **EP 0 942 217 B1**
(45) Veröffentlichungstag und Bekanntmachung des Hinweises auf die Patenterteilung: **15.01.2003**
(21) Anmeldenummer: 99103765.6
(22) Anmeldetag: 26.02.1999
(51) Int. Cl.: F16L 21/06, F16L 17/04

(54) **Rohrkupplung**
Pipe coupling
Raccord de tuyaux

(30) Priorität: 10.03.1998 DE 19810206
(43) Veröffentlichungstag der Anmeldung: 15.09.1999
(73) Patentinhaber: DIAG DESIGN AG, CH-6300 Zug (CH)
(72) Erfinder:
(74) Vertreter: Patent- und Rechtsanwaltssozietät, Maucher, Börjes & Kollegen

(56) Entgegenhaltungen:
- DE-C- 4 111 952
- DE-C- 19 514 940
- US-A- 2 441 754

## Beschreibung

Die Erfindung betrifft eine Rohrkupplung mit einer ringförmigen Kupplungsmanschette zur axialen Sicherung zweier miteinander zu verbindender Rohre, welche Kupplungsmanschette zumindest eine Verbindungsstelle aufweist, der mindestens eine etwa in Rohr-Längsrichtung angeordnete Verbindungsachse zugeordnet ist, wobei die Kupplungsmanschette beidseits der Trennstelle der miteinander zu verbindenden Rohre Sicherungskrallen aufweist, die den Rohraußenumfang beaufschlagen.

Eine Rohrkupplung der eingangs erwähnten Art ist aus der DE 195 14 940 C1 bereits bekannt. Die vorbekannte Rohrkupplung weist eine ringförmige Kupplungsmanschette auf, die durch ein Schellenband gebildet ist. Zum Zusammenziehen des Schellenbandes und zur axialen Sicherung benachbarter Rohrenden ist an der Kupplungsmanschette eine Spanneinrichtung vorgesehen, welche eine Verbindungsstelle zwischen zwei gegenüberliegenden Schellenenden bildet. Die freien Schellenenden sind dazu beidseits als schlaufenförmige Haltelaschen ausgestaltet, wobei in jeder der schlaufenförmigen Schellenenden eine Verbindungsachse gehalten ist, welche als Widerlager dienen und über wenigstens eine Spannschraube oder dergleichen Verbindungselement miteinander verbunden sind. Die Kupplungsmanschette der vorbekannten Rohrkupplung weist an ihrem Schellen-Innenumfang beidseits mehrere, voneinander beabstandete und nach innen orientierte Sicherungskrallen auf, die aus einer laschenförmigen Stanzung am inneren, zu einer Dopplung umgebogenen Falzrandbereich gebildet sind.

Die miteinander zu verbindenden Rohre sind mit ihren benachbarten Rohrenden zwischen den in Rohr-Längsrichtung voneinander beabstandeten Sicherungskrallen angeordnet. Diese Sicherungskrallen sollen sich beim Zusammenziehen der Kupplungsmanschette in den äußeren Rohrumfang eingraben, um die Rohre in axialer Richtung gegen ein unbeabsichtigtes Lösen der Verbindung zu sichern.

Die vorbekannte Rohrkupplung hat sich in vielen Anwendungen sehr bewährt. Es besteht jedoch die Aufgabe, eine Rohrkupplung der eingangs erwähnten Art zu schaffen, mit der - insbesondere bei besonders hartem Rohrmaterial - erhöhte Sicherungskräfte auf den Rohraußenumfang der miteinander zu verbindenden Rohre aufgebracht werden können.

Die erfindungsgemäße Lösung dieser Aufgabe besteht insbesondere darin, daß zumindest eine Verbindungsachse wenigstens ein Sicherungselement trägt oder als Sicherungselement ausgebildet ist, welches mindestens eine, den Rohrumfang beaufschlagende Sicherungskralle hat.

Bei der erfindungsgemäßen Rohrkupplung trägt die Verbindungsachse ein gegenüber dieser separat hergestelltes Sicherungselement. Ebenso kann die Verbindungsachse als Sicherungselement ausgebildet sein, welches gegenüber der Kupplungsmanschette separat herstellbar ist. Dabei sind zusätzlich zu oder statt den am Manschetten-Umfang vorgesehenen Haltekrallen auch am Sicherungselement solche Sicherungskrallen vorgesehen, die sich in das Rohrmaterial eingraben können. Da jedes Sicherungselement ein gegenüber der Verbindungsachse und/oder der Kupplungsmanschette separat hergestelltes Bauteil bildet, können diese Sicherungselemente auch aus einem gegenüber der Kupplungsmanschette härteren und/oder zumindest im Bereich der Sicherungskrallen gehärtetem Material hergestellt werden. Dabei sind die Sicherungskrallen im Bereich der Verbindungsachsen und damit in dem Bereich vorgesehen, wo die größte Kraft direkt auf den Rohrumfang aufgebracht werden kann. Die Sicherungskrallen können sich damit besonders gut in die Rohroberfläche der miteinander zu verbindenden Rohre eingraben, wodurch erhöhte Sicherungskräfte zur axialen Sicherung dieser Rohre aufgebracht werden können.

Dabei sieht eine bevorzugte Ausführung gemäß der Erfindung vor, daß jedes Sicherungselement eine Durchstecköffnung aufweist, welche die zugeordnete Verbindungsachse durchsetzt.

Bereits die am Rohrumfang aufliegenden Sicherungskrallen setzen axialen Kräften einen derart hohen Reibungswiderstand entgegen, daß die benachbarten Rohre sicher und fest aneinander gehalten sind. Eine besonders sichere Verbindung wird aber erreicht, wenn sich die Sicherungskrallen möglichst tief in das gegebenenfalls auch harte Rohrmaterial einschneiden können. Dazu ist es vorteilhaft, wenn die Sicherungskrallen in Richtung zum Rohrumfang schneidenartig zulaufen.

Um die Kupplungsmanschette zusammenziehen und um über die Sicherungskrallen die benötigten radialen Sicherungskräfte auf den Rohrumfang der Rohre aufbringen zu können, sieht eine bevorzugte Ausführung gemäß der Erfindung vor, daß die Kupplungsmanschette an ihren im Bereich einer Verbindungsstelle gegenüberliegenden Manschettenenden einander zugeordnete und als Widerlager dienende Verbindungsachsen aufweist, die zumzusammenziehenderKupplungsmanschette über zumindest eine Spannschraube oder dergleichen Verstellelement miteinander verbunden sind.

In dem von zwei einander zugeordneten Verbindungsachsen gebildeten Verbindungsbereich ist es ausreichend, wenn auf gegenüberliegenden Seiten der einander zugeordneten Verbindungsachsen jeweils zumindest eine dieser Verbindungsachsen ein Sicherungselement trägt. Somit sind in diesem Verbindungsbereich zumindest zwei, in axialer Richtung voneinander beabstandete Sicherungselemente vorgesehen, die gegebenenfalls auch von verschiedenen Verbindungsachsen getragen sein können.

Eine vorteilhafte Ausführungsform gemäß der Erfindung sieht vor, daß die Kupplungsmanschette als Schellenband ausgebildet ist, wobei am Schelleninnenumfang gegebenenfalls noch zusätzliche Sicherungskrallen angeformt sein können.

Eine Weiterbildung gemäß der Erfindung sieht vor, daß die Kupplungsmanschette durch zumindest eine Gelenk- oder Gliederkette gebildet ist, die Kettenglieder hat, welche jeweils über als Kettenbolzen ausgebildete Verbindungsachsen miteinander verbunden sind.

So sieht eine mit besonders geringem Aufwand herstellbare Ausführungsform gemäß der Erfindung vor, daß die zumindest eine Gelenkkette zahnkettenartig ausgebildet ist. Dabei kann es zweckmäßig sein, wenn die Laschen der zumindest einen zahnkettenartigen Gelenkkette als Sicherungselemente dienen und dazu in ihrem dem Rohrumfang zugewandten Randbereich zumindest bereichsweise als Sicherungskrallen ausgebildet sind.

Bei einer entsprechend breiten Ausgestaltung ist eine als Kupplungsmanschette ausgebildete Gelenkkette ausreichend, um benachbarte Rohrenden sicher und fest zwischen den in Rohr-LängsrichtungvoneinanderbeabstandetenSicherungskrallenmiteinander verbinden zu können. Möglich ist aber auch, daß die Kupplungsmanschette aus zumindest zwei auf Abstand miteinander verbundenen Gelenkketten gebildet ist.

Die erfindungsgemäße Rohrkupplung kann axiale Kräfte besonders gut aufnehmen, wenn die als Kettenbolzen dienenden Verbindungsachsen der zumindest einen Gelenkkette an ihrem Bolzenumfang zumindest eine, insbesondere in Umfangsrichtung orientierte Sicherungskralle aufweisen.

Eine weitere Ausführung gemäß der Erfindung sieht vor, daß die Sicherungselemente als Sicherungsrollen mit längsgerichteter Durchstecköffnung ausgebildet sind und daß die Durchstecköffnung jeder Sicherungsrolle eine als Kettenbolzen dienende Verbindungsachse durchsetzt. Diese als Sicherungsrollen ausgebildeten Sicherungselemente können an einer Gelenkkette zusätzlich zu den oder statt der als Sicherungselemente dienenden Laschen vorgesehen sein.

Zweckmäßig ist es, wenn die Sicherungsrollen zumindest eine insbesondere in Umfangsrichtung orientierte Sicherungskralle aufweisen.

Dabei können axiale Kräfte besonders gut in jedes einzelne Sicherungselement eingeleitet werden, ohne die Gelenkkette im übrigen zu belasten, wenn die insbesondere aus nur einer, entsprechend breiten Gelenkkette gebildete Kupplungsmanschette an den Sicherungsrollen zumindest zwei in Rollen-Längsrichtung voneinander beabstandete Sicherungskrallen aufweisen.

Beim Zusammenziehen und Spannen der Kupplungsmanschette gleiten die Sicherungselemente auch in Umfangsrichtung über den Rohrumfang und können sich dabei besonders gut in das Rohrmaterial einschneiden, wenn die Sicherungskrallen kreisbogenförmig oder konvex ausgebildet sind.

Möglich ist aber auch, daß die Sicherungskrallen einen runden oder kreisförmigen Außenumfang haben und zum Einschneiden in den Rohrumfang insbesondere drehbar auf der zugeordneten Verbindungsachse gelagert sind.

Um die Rohre, die mit ihren einander zugewandten Stirnenden im Bereich zwischen den in Rohr-Längsrichtung voneinander beabstandeten Sicherungskrallen angeordnet sind, dicht und fest miteinander verbinden zu können, ist es vorteilhaft, wenn zwischen den in axialer Richtung voneinander beabstandeten Haltekrallen eine Dichtungsmanschette vorgesehen ist. Da insbesondere bei einer als Gliederkette ausgebildeten Kupplungsmanschette die Sicherungsfunktion einerseits und die Dichtungsfunktion andererseits sichtbar voneinander getrennt sind, kann es vorteilhaft sein, wenn die Dichtungsmanschette ein Dichtungsgehäuse sowie zumindest ein vom Dichtungsgehäuse umgriffenes Dichtelement aufweist.

Bei einer als Schellenband ausgestalteten Kupplungsmanschette sieht eine bevorzugte Ausführungsform gemäß der Erfindung vor, daß am Schellen-Innenumfang der als Schellenband ausgebildeten Kupplungsmanschette zusätzliche Sicherungskrallen vorgesehen sind und daß die von einer Verbindungsachse getragenen Sicherungselemente mit ihren Sicherungskrallen über die in diesem Bereich am Schellen-Innenumfang vorgesehenen zusätzlichen Sicherungskrallen vorstehen. Somit können sich zunächst die Sicherungselemente sowie die von den Verbindungsachsen weiter entfernten, am Schellen-Innenumfang zusätzlich vorgesehenen Sicherungskrallen gut in die Rohroberfläche eingraben, bevor die im Bereich der Verbindungsachse am Schellen-Innenumfang befindlichen Sicherungskrallen den Rohrumfang der miteinander zu verbindenden Rohre beaufschlagen.

Um auch bei einer als Gelenkkette ausgebildeten Kupplungsmanschette diese Kupplungsmanschette zusammenziehen und die benachbarten Rohrenden damit in axialer Richtung sichern zu können, ist es vorteilhaft, wenn die als Gelenkkette ausgebildete Kupplungsmanschette zumindest eine erste Verbindungsstelle mit zwei an gegenüberliegenden Manschettenenden vorgesehenen und über wenigstens eine Spannschraube oder dergleichen Verstellelement verbundenen ersten Verbindungsachsen hat und wenn die Kupplungsmanschette zwischen ihren Kettengliedern im übrigen zweite Verbindungsstellen mit jeweils einer als Kettenbolzen dienenden und benachbarte Kettenglieder miteinander verbindenden zweiten Verbindungsachse aufweist.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt in zum Teil nicht maßstäblicher Darstellung:

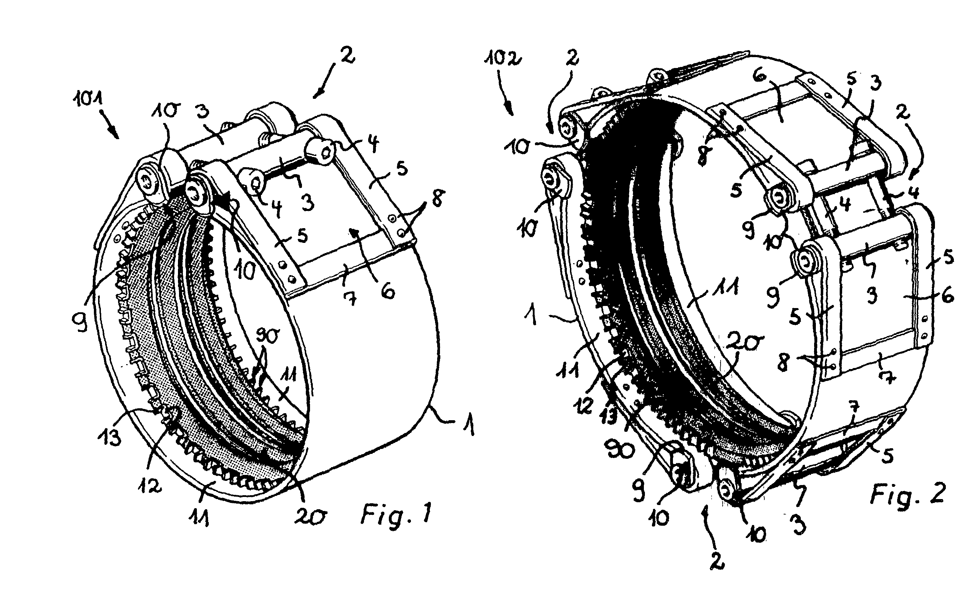

- Fig. 1: eine Rohrkupplung mit einer Kupplungsmanschette, die aus einem einteiligen Schellenband gebildet ist, wobei an der Kupplungsmanschette eine durch zwei, an gegenüberliegenden Schellenenden vorgesehene Verbindungsachsen begrenzte Verbindungsstelle vorgesehen ist, die zum Zusammenziehen der Kupplungsmanschette über zwei Spannschrauben miteinander verbunden sind, und wobei die Verbindungsachsen an ihren beiden Stirnenden jeweils ein Sicherungselement tragen, welche mit ihren als Sicherungskrallen ausgebildeten inneren Stirnrändern den Rohrumfang miteinander zu verbindender Rohre beaufschlagen,
- Fig. 2: eine Rohrkupplung, ähnlich der aus Fig. 1, wobei die Rohrkupplung eine Kupplungsmanschette aufweist, die hier aus einem dreiteiligen Schellenband gebildet ist,
- Fig. 3: eine beispielhaft in verschiedenen Ausführungsformen dargestellte Rohrkupplung, deren Kupplungsmanschette als zahnkettenartige Glieder- oder Gelenkkette ausgebildet ist, wobei die Kupplungsmanschette in einem Teilkreisbereich als Sicherungselemente ausgebildete Kettenglieder-Laschen und in einem anderen Teilkreisbereich rollenförmigebeziehungsweisescheibenförmigeSicherungselemente aufweist,
- Fig. 4: eine Rohrkupplung, ähnlich der aus Fig. 3, bei der die als Kettenbolzen ausgebildeten Verbindungsachsen rollenförmige Sicherungselemente tragen, wobei an diesen rollenförmigen Sicherungselementen in Rollen-Umfangsrichtung umlaufende Sicherungskrallen vorgesehen sind, und
- Fig. 5: eine Rohrkupplung, deren Kupplungsmanschette hier aus zwei, auf Abstand miteinander verbundenen Gelenkketten gebildet ist, wobei in verschiedenen Teilquerschnitten unterschiedlich ausgestaltete Sicherungselemente vorgestellt werden.

In Fig. 1 und 2 sind zwei Rohrschellen 101, 102 dargestellt, die eine ringförmige Kupplungsmanschette haben. Die Kupplungsmanschetten 1 der Rohrschellen 101, 102 sind - wie auch in der DE 195 14 940 C1 beschrieben - als Schellenband ausgebildet. Die als Schellenband ausgebildeten Kupplungsmanschetten 1 sind zum Verbinden gegenüberliegender Rohrenden mittels Spanneinrichtungen zusammenziehbar, die jeweils an einer Verbindungsstelle 2 angeordnet sind.

Jede Spanneinrichtung hat zwei in Rohr-Längsrichtung orientierte Verbindungsachsen 3, die zum Zusammenziehen der Kupplungsmanschette 1 über zwei Spannschrauben 4 miteinander verbunden sind und diesen Spannschrauben 4 als Widerlager dienen. Während die Spannschrauben 4 mit ihrem Schraubenkopf den Bolzenumfang der einen Verbindungsachse beaufschlagen, sind sie mit einem zumindest am freien Schaftende vorgesehenen Außengewinde in ein Innengewinde an der zugeordneten gegenüberliegenden Verbindungsachse 3 der Spanneinrichtung eingeschraubt.

Wie aus den Fig. 1 und 2 deutlich wird, sind die im Bereich der Verbindungsstellen 2 vorgesehenen freien Schellenenden zur Aufnahme der Verbindungsachsen 3 schlaufenförmig ausgebildet. Dabei sind die freien Schellenenden der Kupplungsmanschette 1 jeweils beidseits in den Längsrandbereichen als schlaufenförmige Haltelaschen 5 ausgebildet. Die beiden Haltelaschen 5 jedes Schellenendes begrenzen eine Durchgriffsöffnung 6 zwischen sich, welche die Spannschrauben 4 durchsetzen. Die beiden, jeweils einander zugeordneten Haltelaschen 5 sind am freien und nach außen gebogenen Schellenende über einen Steg 7 der als Schellenband ausgebildeten Kupplungsmanschette miteinander verbunden und an dieser befestigt. Zur Befestigung der Haltelaschen 5 könnten diese zwar auch an ihren Laschenenden beispielsweise verschweißt sein; vorzugsweise sind diese Laschenenden - wie hier dargestellt - jedoch durch Nieten 8 befestigt, wodurch die Korossionsfestigkeit der Kupplungsmanschette 1 begünstigt wird und auch kostengünstigere Materialien verwendet werden können.

In den Fig. 1 und 2 ist dargestellt, daß jede der Verbindungsachsen an ihren beiden, über die Haltelaschen überstehenden Achsenden jeweils ein plattenförmiges Sicherungselement 10 tragen. Dabei ist der innenliegende Stirnrand dieser Sicherungselemente 10 jeweils als Sicherungskralle 9 ausgestaltet, welche den Rohrumfang der miteinander zu verbindenden Rohre beaufschlagt.

Da jedes Sicherungselement 10 ein gegenüber der Verbindungsachse 3 sowie der Kupplungsmanschette 1 separat hergestelltes Bauteil bildet, können diese Sicherungselemente 10 auch aus einem gegenüber der Kupplungsmanschette 1 härteren und/oder zumindest im Bereich der Sicherungskrallen 9 gehärteten Material hergestellt werden. Dabei sind die Sicherungskrallen 9 im Bereich der Verbindungsachsen 3 und damit in dem Bereich vorgesehen, wo die größte Kraft direkt auf den Rohrumfang aufgebracht werden kann. Die Sicherungskrallen 9 können sich damit besonders gut in den Rohrumfang der miteinander zu verbindenden, hier allerdings nicht dargestellten Rohre eingraben, wodurch erhöhte Sicherungskräfte zur axialen Sicherung dieser Rohre aufgebracht werden können.

Zusätzlich sind auch am Schellen-Innenumfang der Kupplungsmanschette 1 weitere Sicherungs- oder Haltekrallen 90 vorgesehen. Wie aus den Fig. 1 und 2 deutlich wird, weist die schellenbandförmige Kupplungsmanschette 1 dazu beidseits an ihren Umfangsrandbereichen einen nach innen umgeformten Falz oder eine Dopplung auf. Dabei sind die Sicherungs- oder Haltekrallen 90 jeweils aus einer laschenförmigen Stanzung am inneren Falz 11 gebildet. Die laschenförmigen Stanzungen weisen Laschenteile 12, 13 auf, von denen ein erstes Laschenteil 12 einstückig am inneren Falzrandbereich angeformt ist und von denen zumindest ein zweites Laschenteil 13 mit dem ersten Laschenteil 12 über eine radial orientierte Falzlinie einstückig verbunden und in axialer Richtung nach außen orientiert ist.

Bei den in Fig. 1 und 2 dargestellten Rohrschellen 101, 102 stehen die Sicherungselemente 10 gegenüber den benachbarten, am Schellen-Innenumfang vorgesehenen Sicherungs- und Haltekrallen 90 mehr in Richtung zur Rohroberfläche vor. Beim Festziehen der Spannschrauben 4 haben die den Sicherungselementen 10 benachbarten Sicherungsund Haltekrallen 90 daher zunächst keinen Kontakt mit der Rohroberfläche und hängen in der Luft, während sich die Sicherungselemente 10 mit ihren schneidenartig zulaufenden Sicherungskrallen 9 in die Rohroberfläche eingraben können. Gleichzeitig wird die auf die Spannschrauben 4 ausgeübte Kraft besser zu den, gegenüber den Verbindungsstellen 2 weiter entfernten Sicherungs- und Haltekrallen 90 übertragen, welche damit ebenfalls fest am Rohrumfang anliegen.

Die Geometrie der Sicherungselemente 10 sowie der Sicherungs- und Haltekrallen 90 ist so aufeinander abgestimmt, daß auch die zu den Verbindungsstellen 2 benachbarten Sicherungs- und Haltekrallen 90 noch zur Rohroberfläche gezogen werden, wenn sich die Sicherungselemente 10 mit ihren Sicherungskrallen 9 in die Rohroberfläche 9 eingegraben haben.

Die an den Sicherungselementen 10 vorgesehenen Sicherungskrallen 9 weisen eine konvexe Formgebung auf, wobei die Plattenebene der Sicherungselemente in Umfangsrichtung der Rohre orientiert ist. Durch die konvexe Formgebung der schneidkantenartigen Sicherungskrallen 9 wird ein relativ flacher Winkel zur Rohroberfläche in Richtung der in Umfangsrichtung orientierten Verschiebung erreicht, so daß die Sicherungselemente 10 insbesondere beim Festziehen der Kupplungsmanschette 1 gut auf dem Rohrumfang gleiten können.

Um am Rohrumfang bei Bedarf noch weitere Sicherungselemente 10 plazieren zu können, kann die Kupplungsmanschette 1 auch aus einem mehrgliedrigen Schellenband gebildet sein. Während die Rohrkupplung 101 gemäß Fig. 1 ein einteiliges Schellenband mit nur einer Verbindungsstelle 2 aufweist, hat der Rohrverbinder 102 gemäß Fig. 2 ein mehrgliedriges Schellenband mit beispielsweise drei Schellenbauteilen, die durch ebenfalls drei, in Umfangsrichtung gleichmäßig beabstandete Verbindungsstellen 2 voneinander getrennt sind. Mit der in Fig. 2 dargestellten Rohrkupplung 102 können somit noch höhere Haltekräfte auf den Rohrumfang aufgebracht werden.

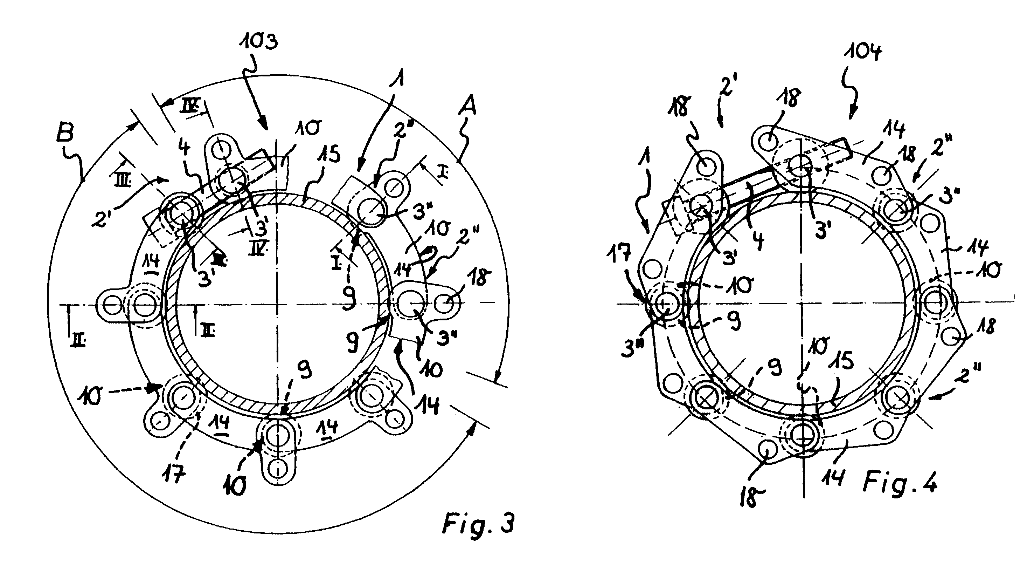

In den Fig. 3 bis 5 sind Rohrkupplungen 103, 104 und 105 dargestellt, deren Kupplungsmanschette 1 als Glieder- oder Gelenkkette ausgebildet ist. Wie im Teilkreisbereich A in Fig. 3 deutlich wird, kann eine solche Kupplungsmanschette 1 beispielsweise zahnkettenartig ausgebildet sein. Die Kupplungsmanschette 1 weist im Teilkreisbereich A dazu Ketten-Laschen 14 auf, die in ihrem dem Rohrumfang der Rohre 15 zugewandten und kreisbogenförmig vorstehenden Randbereich als Sicherungskrallen 9 ausgebildet sind. Die als Sicherungselemente 10 dienenden Ketten-Laschen 14 sind von Verbindungsachsen 3'' getragen, welche benachbarte Laschen 14 miteinander verbinden und somit gleichzeitig auch als Kettenbolzen dienen.

Im Teilkreisbereich B von Figur 3 weist die Kupplungsmanschette 1 scheiben- oder rollenförmige Sicherungselemente 10 auf.

Rollenförmige Sicherungselemente 10 sind auch an der ebenfalls als Glieder- oder Gelenkkette ausgebildeten Kupplungsmanschette 104 in Figur 4 vorgesehen.

Die separaten rollenförmigen Sicherungselemente 10 der Kupplungsmanschette 104 haben eine längsgerichtete Durchstecköffnung, die jeweils von einer als Kettenbolzen dienenden Verbindungsachse 3'' durchsetzt werden. An den rollenförmigen Sicherungselementen 10 der Rohrkupplung 104 ist jeweils zumindest eine in Umfangsrichtung umlaufende Sicherungskralle 9 vorgesehen.

Aus den Fig. 3 und 4 wird deutlich, daß zur axialen Sicherung der Rohre 15 eine entsprechend breit bemessene Gliederkette ausreichend ist, die beispielsweise an ihren Sicherungsrollen 17 und/oder an ihren ebenfalls als Sicherungselemente 10 ausgebildeten Ketten-Laschen 14 die in Rohr-Längsrichtung voneinander beabstandeten Sicherungskrallen 9 aufweisen. Dabei kann es vorteilhaft sein, wenn die Sicherungsrollen 17 jeweils zwei axial voneinander beabstandete Sicherungskrallen 9 haben, damit eventuelle Axialkräfte in die Sicherungsrollen 17 aufgenommen werden können, ohne die als Gliederkette ausgebildete Kupplungsmanschette 1 ansonsten weiter zu belasten.

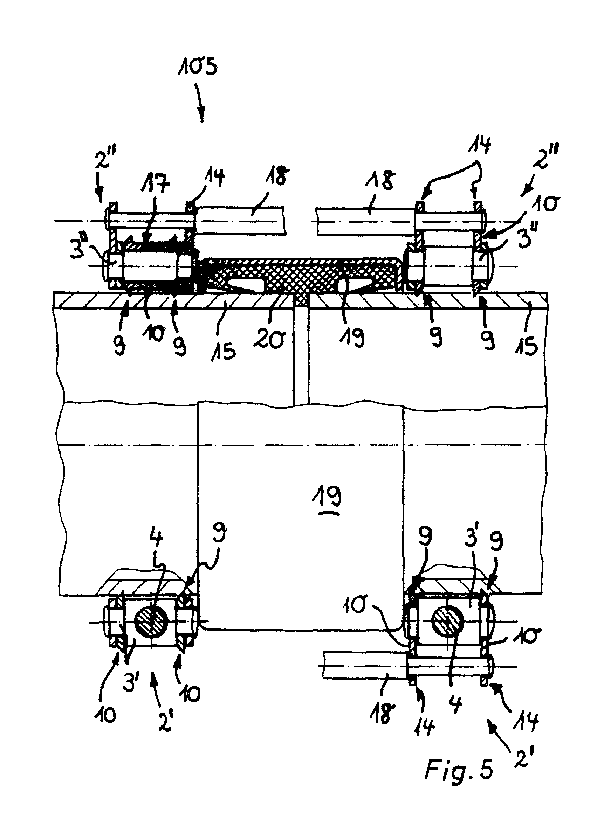

Wie in Fig. 5 angedeutet ist, kann die Kupplungsmanschette 1 aber auch aus zumindest zwei auf Abstand miteinander verbundenen Gelenkketten gebildet sein, wobei zwischen den voneinander beabstandeten Gelenk- oder Gliederketten die miteinander zu verbindenden Rohrenden der Rohre 15 angeordnet sind.

Der in Figur 5 rechte obere Teilquerschnitt zeigt die laschenförmigen Sicherungselemente 10 einer zahnkettenartigen Gelenkkette in der Querschnittsebene I-I aus Figur 3. Im linken oberen Teilquerschnitt von Figur 5 ist demgegenüber ein rollenförmiges Sicherungselement 10 in der Querschnittsebene II-II aus Figur 3 dargestellt. Im linken unteren Teilquerschnitt von Figur 5 sind scheibenförmige Sicherungselemente 10 in der Querschnittsebene III-III aus Figur 3 zu sehen, wobei diese scheibenförmigen Sicherungselemente 10 beidseits bis zu einer als Anschlag dienenden Querschnittserweiterung auf die Verbindungsachse 3' aufgeschoben und darauf mittels der außenseitig angeordneten Kettenlaschen gehalten sind. Dabei dient die Verbindungsachse 3' der Spannschraube 4 als Widerlager. Der in Figur 5 rechte untere Teilquerschnitt zeigt wiederum die laschenförmigen Sicherungselemente 10 einer zahnkettenartigen Gelenkkette in Querschnittsebene IV-IV aus Figur 3, wobei auch hier die die laschenförmigen Sicherungselemente 10 durchsetzende Verbindungsachse 3' einer Spannschraube 4 als Widerlager dient. Die in Figur 5 dargestellten verschiedenen Sicherungselemente können einzeln oder miteinander kombiniert an einer als Gelenk- oder Gliederkette ausgebildeten Kupplungsmanschette 1 vorgesehen sein.

Die aus zumindest einer Gelenkkette gebildeten Kupplungsmanschetten 103 bis 105 gemäß den Fig. 3 bis 5 weisen somit jeweils zumindest eine erste Verbindungsstelle 2' auf, die zwei an gegenüberliegenden Manschettenenden vorgesehene und über wenigstens eine Spannschraube 4 oder dergleichen Verstellelement verbundene erste Verbindungsachsen 3' haben. Die Kupplungsmanschetten 103 bis 105 weisen zwischen ihren Kettengliedern im übrigen zweite Verbindungsstellen 2'' auf, denen jeweils eine als Kettenbolzen dienende und benachbarte Kettenglieder miteinander verbindende zweite Verbindungsachse 3'' zugeordnet ist.

Während die in den Fig. 1 und 2 dargestellten Sicherungselemente 10 mit den zugeordneten Verbindungsachsen 3 drehfest verbunden sind, sind die rollen- oder scheibenförmigen Sicherungselemente 10 der in den Fig. 3 bis 5 dargestellten Rohrkupplungen 103 bis 105 auf ihren Verbindungsachsen 3' beziehungsweise 3'' drehbar gehalten.

Zur drehfesten Verbindung der Sicherungselemente 10 weisen diese bei den in Fig. 1 und 2 dargestellten Rohrkupplungen 101 und 102 beispielsweise unrunde Durchstecköffnungen auf, in welche die diese Durchstecköffnungen durchsetzenden und beidseits außenseitig zu einem Niet geformten Stirnendbereiche der Verbindungsachsen 3 angreifen.

Während sich die Laschen 14 der in Fig. 3 dargestellten Kupplungsmanschette 103 trotz der gelenkigen Verbindung mit den Verbindungsachsen 3' beziehungsweise 3'' gegenseitig in Position halten, können die rollen- oder scheibenförmigen Sicherungselemente 10 in Figur 3 und 4 auf ihren Verbindungsachsen 3' oder 3'' während des Zusammenziehens der Kupplungsmanschette 1 in Umfangsrichtung abrollen.

In den Fig. 3 bis 5 sind die voneinander beabstandeten Gliederketten über stangenförmige Kettenverbinder 18 aneinander gehalten, die an den Kettenglied-Laschen 14 der einzelnen Gliederketten angreifen. Anstelle von getrennten Verbindungsachsen 3' oder 3'' für die in den Fig. 3 bis 5 dargestellten Gliederkettenelemente können zum Verbinden der die Kupplungsmanschette 1 bildenden beiden Gliederketten gemeinsame Verbindungsachsen 3' oder 3'' verwendet werden. Auch ist es möglich, eine Kupplungsmanschette 1 vorzusehen, die aus zumindest einer zahnkettenartigen Gliederkette ausgebildet ist und die neben den an ihren Ketten-Laschen 14 vorgesehenen Sicherungskrallen 9 zusätzlich auch als Sicherungsrollen 17 ausgebildete Sicherungselemente 10 aufweist.

Eine Kupplungsmanschette 1, die - wie in den Fig. 3 bis 5 dargestellt - aus zumindest einer Gliederkette ausgebildet ist, bietet den Vorteil, daß die über die Spannschrauben 4 aufgebrachten hohen Spannkräfte an wenigen, vorzugsweise gleichmäßig voneinander beabstandeten Punkten konzentriert in den Rohrumfang der Rohre 15 eingeleitet werden. Sofern die Kupplungsmanschette 1 - wie in Fig. 5 angedeutet - aus zumindest zwei Gliederketten ausgebildet ist, nehmen die stangenförmigen Kettenverbinder 18 die beispielsweise temperaturbedingt auftretenden Axialkräfte auf. Dabei sind die Gliederketten der Kupplungsmanschette 1 an den Kettenverbindern 18 so befestigt, daß die beidseits vorgesehenen Gliederketten nicht axial nach außen weggeschoben werden können; die mittels der Kupplungsmanschette 1 in axialer Richtung gesicherten Rohre werden somit an einem Auseinandergleiten gehindert. Dabei kann die Befestigung der stangenförmigen Kettenverbinder 18 an den Kettenlaschen 14 der Gliederketten durch einen Nietwulst am Achsende erfolgen.

Um eine hohe Biegesteifigkeit der Rohrverbindung zu erreichen, sollten die Gliederketten auch gegen ein axiales Verschieben nach innen gesichert sein; dazu kann beispielsweise am stangenförmigen Kettenverbinder 18 beidseits ein Ringflansch oder dergleichen Anschlag vorgesehen sein und/oder die Gliederketten können, etwa mit den inneren Nietwülsten ihrer Verbindungsachsen 3' beziehungsweise 3'', an einem Dichtgehäuse anliegen, welches zwischen den in axialer Richtung voneinander beabstandeten Sicherungskrallen vorgesehen ist.

Ein solches Dichtgehäuse 19 ist beispielhaft in Fig. 5 dargestellt. Das Dichtgehäuse 19, das ohne eine Schraubverbindung auskommt und bei der Montage nur auf die zu verbindenen Rohre aufgesteckt werden muß, umgreift ein inneres Dichtelement 20 aus elastischem Material. Bei der in Fig. 5 dargestellten Rohrkupplung 105 sind somit die Sicherungsfunktion der Kupplungsmanschette 1 einerseits und die Dichtfunktion des das Dichtelement 20 aufnehmenden Dichtgehäuses 19 andererseits auch sichtbar voneinander getrennt. Eine hier allerdings nicht dargestellte Ausführungsform gemäß der Erfindung kann auch darin bestehen, daß die Rohrkupplung ein als Formteil ausgebildetes Dichtgehäuse hat, welches in einer mittleren Gehäuse-Ausformung ein Dichtelement und beidseits davon, in weiteren Gehäuse-Ausformungen, die die Kupplungsmanschette bildenden Gelenkketten aufnimmt. Bei einer solchen Ausführungsform, bei der die Gelenkketten mittels dem Dichtgehäuse auf Abstand miteinander verbunden sind, kann auf weitere stangenförmige Kettenverbinder oder dergleichen verzichtet werden. Insbesondere eine aus zumindest einer Gliederkette ausgebildete Kupplungsmanschette, wie sie in den Fig. 3 bis 5 dargestellt ist, kann sich gut an den Außenumfang der Rohre 15 anpassen.

## Patentansprüche

1. Rohrkupplung (101, 102, 103, 104, 105) mit einer ringförmigen Kupplungsmanschette (1) zur axialen Sicherung zweier miteinander zu verbindender Rohre, welche Kupplungsmanschette (1) zumindest eine Verbindungsstelle (2, 2', 2'') aufweist, der (2, 2', 2'') mindestens eine etwa in Rohr-Längsrichtung angeordnete Verbindungsachse (3, 3', 3'') zugeordnet ist, wobei die Kupplungsmanschette (1) beidseits der Trennstelle der miteinander zu verbindenden Rohre Sicherungskrallen aufweist, die den Rohraußenumfang beaufschlagen, **dadurch gekennzeichnet, daß** zumindest eine Verbindungsachse (3, 3', 3'') wenigstens ein Sicherungselement (10) trägt oder als Sicherungselement (10) ausgebildet ist, welches (10) mindestens eine, den Rohrumfang beaufschlagende Sicherungskralle (9) hat.

2. Rohrkupplung nach Anspruch 1, **dadurch gekennzeichnet, daß** jedes Sicherungselement (10) eine Durchstecköffnung aufweist, welche die zugeordnete Verbindungsachse (3, 3', 3'') durchsetzt.

3. Rohrkupplung nach Anspruch 1 oder 2, **dadurch gekennzeichnet, daß** die Sicherungskrallen (9) in Richtung zum Rohrumfang schneidenartig zulaufen.

4. Rohrkupplung nach einem der Ansprüche 1 bis 3, **dadurch gekennzeichnet, daß** die Kupplungsmanschette (1) an ihren, im Bereich einer Verbindungsstelle (2, 2') gegenüberliegenden Manschettenenden einander zugeordnete und als Widerlager dienende Verbindungsachsen (3, 3') aufweist, die zum Zusammenziehen der Kupplungmanschette (1) über zumindest eine Spannschraube (4) oder dergleichen Verstellelement miteinander verbunden sind.

5. Rohrkupplung nach einem der Ansprüche 1 bis 4, **dadurch gekennzeichnet, daß** auf gegenüberliegenden Seiten der einander zugeordneten Verbindungsachsen (3, 3', 3'') jeweils zumindest eine dieser Verbindungsachsen ein Sicherungselement (10) trägt.

6. Rohrkupplung nach einem der Ansprüche 1 bis 5, **dadurch gekennzeichnet, daß** die Kupplungsmanschette (1) als Schellenband ausgebildet ist.

7. Rohrkupplung nach einem der Ansprüche 1 bis 5, **dadurch gekennzeichnet, daß** die Kupplungsmanschette durch zumindest eine Gelenk- oder Gliederkette gebildet ist, die Kettenglieder hat, welche jeweils über die als Kettenbolzen ausgebildeten Verbindungsachsen (3'') miteinander verbunden sind.

8. Rohrkupplung nach Anspruch 7, **dadurch gekennzeichnet, daß** die zumindest eine Gelenkkette zahnkettenartig ausgebildet ist.

9. Rohrkupplung nach Anspruch 7 oder 8, **dadurch gekennzeichnet, daß** Laschen (14) der zumindest einen zahnkettenartigen Gelenkkette als Sicherungselemente (10) dienen und dazu in ihren dem Rohrumfang zugewandten Randbereich zumindest bereichsweise als Sicherungskrallen (9) ausgebildet sind.

10. Rohrkupplung nach einem der Ansprüche 7 bis 9, **dadurch gekennzeichnet, daß** die Kupplungsmanschette (1) aus zumindest zwei auf Abstand miteinander verbundenen Gelenkketten gebildet ist.

11. Rohrkupplung nach einem der Ansprüche 7 bis 10, **dadurch gekennzeichnet, daß** die als Kettenbolzen dienenden Verbindungsachsen (3'') der zumindest einen Gelenkkette an ihrem Bolzenumfang zumindest eine insbesondere in Umfangsrichtung orientierte Sicherungskralle aufweisen.

12. Rohrkupplung nach einem der Ansprüche 7 7 bis 11, **dadurch gekennzeichnet**, daßdieSicherungselemente (10) als Sicherungsrollen (17) oder Sicherungsscheiben mit längsgerichteter Durchstecköffnung ausgebildet sind und daß die Durchstecköffnung jeder Sicherungsrolle (17) oder Sicherungsscheibe eine gegebenenfalls als Kettenbolzen dienende Verbindungsachse (3', 3'') durchsetzt.

13. Rohrkupplung nach Anspruch 12, daß die Sicherungsrollen (17) zumindest eine insbesondere in Umfangsrichtung orientierte Sicherungskralle (9) aufweisen.

14. Rohrkupplung nach Anspruch 12 oder 13, **dadurch gekennzeichnet, daß** die Sicherungsrollen (17) zumindest zwei, in Rollen-Längsrichtung voneinander beabstandete Sicherungskrallen (9) haben.

15. Rohrkupplung nach einem der Ansprüche 1 bis 14, **dadurch gekennzeichnet, daß** die Sicherungskrallen (9) kreisbogenförmig oder konvex ausgebildet sind.

16. Rohrkupplung nach einem der Ansprüche 1 bis 14, **dadurch gekennzeichnet, daß** die Sicherungskrallen (9) einen runden oder kreisförmigen Außenumriß haben und insbesondere drehbar auf der zugeordneten Verbindungsachse (3', 3'') gelagert sind.

17. Rohrkupplung nach einem der Ansprüche 1 bis 16, **dadurch gekennzeichnet, daß** zwischen den in axialer Richtung voneinander beabstandeten Sicherungskrallen (9) eine Dichtungsmanschette vorgesehen ist.

18. Rohrkupplung nach Anspruch 17, **dadurch gekennzeichnet, daß** die Dichtungsmanschette ein Dichtungsgehäuse (19) sowie zumindest ein vom Dichtungsgehäuse (19) umgegriffenes Dichtelement (20) aufweist.

19. Rohrkupplung nach einem der vorstehenden Ansprüche, **dadurch gekennzeichnet, daß** am Schellen-Innenumfang der als Schellenband ausgebildeten Kupplungsmanschette (1) zusätzliche Sicherungskrallen (90) vorgesehen sind, und daß die von einer Verbindungsachse (3) getragenen Sicherungselemente (10) mit ihren Sicherungskrallen (9) über die in diesem Bereich am Schellen-Innenumfang vorgesehenen zusätzlichen Sicherungskrallen (90) vorstehen.

20. Rohrkupplung nach einem der vorstehenden Ansprüche, **dadurch gekennzeichnet, daß** die durch zumindest eine Gelenkkette gebildete Kupplungsmanschette (1) wenigstens eine erste Verbindungsstelle (2') mit zwei an gegenüberliegenden Manschettenenden vorgesehenen und über wenigstens eine Spannschraube (4) oder dergleichen Verstellelement verbundenen ersten Verbindungsachsen (3') hat und daß die Kupplungsmanschette (1) zwischen ihren Kettengliedern im übrigen zweite Verbindungsstellen (2'') mit jeweils einer als Kettenbolzen dienenden und benachbarte Kettenglieder verbindenden zweiten Verbindungsachse (3'') aufweist.

## Claims

1. Pipe coupling (101, 102, 103, 104, 105) having an annular coupling sleeve (1) for axially securing two pipes which are to be joined together, said coupling sleeve (1) having at least one connecting point (2, 2', 2") with which is associated at least one connecting spindle (3, 3', 3") arranged substantially in the longitudinal direction of the pipe, the coupling sleeve (1) having, on both sides of the disconnecting point between the pipes to be joined together, securing claws which act on the outer circumference of the pipe, **characterised in that** at least one connecting spindle (3, 3', 3") carries at least one securing element (10) or is constructed as a securing element (10) which has at least one securing claw (9) acting on the circumference of the pipe.

2. Pipe coupling according to claim 1, **characterised in that** each securing element (10) has an insertion opening through which the associated connecting spindle (3, 3', 3") passes.

3. Pipe coupling according to claim 1 or 2, **characterised in that** the securing claws (9) taper like blades towards the periphery of the pipe.

4. Pipe coupling according to one of claims 1 to 3, **characterised in that** the coupling sleeve (1) has, on its sleeve ends located opposite one another in the region of a connecting point (2, 2'), connecting spindles (3, 3') associated with one another and acting as abutments, which are connected to one another by at least one tightening screw (4) or similar adjusting element for tightening the coupling sleeve (1).

5. Pipe coupling according to one of claims 1 to 4, **characterised in that** on opposite sides of the associated connecting spindles (3, 3', 3") at least one of these connecting spindles carries a securing element (10).

6. Pipe coupling according to one of claims 1 to 5, **characterised in that** the coupling sleeve (1) is constructed as a clamping hoop.

7. Pipe coupling according to one of claims 1 to 5, **characterised in that** the coupling sleeve is formed by at least one articulated or segmented chain which has chain links connected to one another via the connecting spindles (3") in the form of link pins.

8. Pipe coupling according to claim 7, **characterised in that** the at least one articulated chain is constructed as a gear chain.

9. Pipe coupling according to claim 7 or 8, **characterised in that** fishplates (14) of the at least one articulated chain in the form of a gear chain act as securing elements (10) and for this purpose are constructed, at least in part, as securing claws (9) in their edge region closest to the periphery of the pipe.

10. Pipe coupling according to one of claims 7 to 9, **characterised in that** the coupling sleeve (1) is formed from at least two articulated chains joined together at a spacing from one another.

11. Pipe coupling according to one of claims 7 to 10, **characterised in that** the connecting spindles (3") of the at least one articulated chain which act as link pins have, on the periphery of the pin, at least one securing claw which is oriented particularly in the circumferential direction.

12. Pipe coupling according to one of claims 7 to 11, **characterised in that** the securing elements (10) are constructed as securing rollers (17) or securing discs with a longitudinally directed insertion opening, and a connecting spindle (3', 3") optionally acting as a link pin passes through the insertion opening of each securing roller (17) or securing disc.

13. Pipe coupling according to claim 12, **characterised in that** the securing rollers (17) have at least one securing claw (9) oriented particularly in the circumferential direction.

14. Pipe coupling according to claim 12 or 13, **characterised in that** the securing rollers (17) have at least two securing claws (9) spaced apart from one another in the longitudinal direction of the rollers.

15. Pipe coupling according to one of claims 1 to 14, **characterised in that** the securing claws (9) are arcuate or convex in construction.

16. Pipe coupling according to one of claims 1 to 14, **characterised in that** the securing claws (9) have a round or circular outer contour and in particular are rotatably mounted on the associated connecting spindle (3', 3").

17. Pipe coupling according to one of claims 1 to 16, **characterised in that** a sealing sleeve is provided between the securing claws (9) which are spaced apart from one another in the axial direction.

18. Pipe coupling according to claim 17, **characterised in that** the sealing sleeve has a sealing housing (19) and at least one sealing element (20) surrounded by the sealing housing (19).

19. Pipe coupling according to one of the preceding claims, **characterised in that** additional securing claws (90) are provided on the inner circumference of the coupling sleeve (1) in the form of a clamping hoop, and **in that** the securing elements (10) carried by a connecting spindle (3) project with their securing claws (9) over the additional securing claws (90) provided in this region on the inner circumference of the hoop.

20. Pipe coupling according to one of the preceding claims, **characterised in that** the coupling sleeve (1) formed by at least one articulated chain has at least one first connecting point (2') with two first connecting spindles (3') provided on opposite ends of the sleeve and connected via at least one tightening screw (4) or similar adjusting element, and **in that** the coupling sleeve (1) further comprises, between its chain links, second connecting points (2") with in each case a second connecting spindle (3") acting as link pin and joining adjacent chain links together.

## Revendications

1. Raccord de tuyau (101, 102, 103, 104, 105) avec une manchette de raccordement annulaire (1) permettant de fixer de façon axiale deux tuyaux à raccorder, laquelle manchette de raccordement (1) présente au moins un point de jonction (2, 2', 2"), lequel (2, 2', 2") correspond au moins à un axe de liaison (3, 3', 3") agencé dans le sens longitudinal du tuyau, la manchette de raccordement (1) présente des griffes de fixation situées des deux côtés du point de séparation des deux tuyaux à raccorder, lesquelles griffes épousent la circonférence extérieure du tuyau, **caractérisé en ce qu'**au moins un axe de liaison (3, 3', 3") comprend au moins un élément de fixation (10) ou bien est conçu comme un élément de fixation (10), lequel (10) présente au moins une griffe de fixation (9) épousant la circonférence du tuyau.

2. Raccord de tuyau selon la revendication 1, **caractérisé en ce que** chaque élément de fixation (10) présente une ouverture de passage, laquelle traverse l'axe de liaison correspondant (3, 3', 3").

3. Raccord de tuyau selon la revendication 1 ou 2, **caractérisé en ce que** les griffes de fixation (9) s'étendent en direction de la circonférence du tuyau en se coupant.

4. Raccord de tuyau selon l'une des revendications 1 à 3, **caractérisé en ce que** la manchette de raccordement (1) présente des axes de liaison (3, 3') conjugués les uns par rapport aux autres et servant de butée au niveau de ses extrémités opposées à un point de jonction (2, 2'), lesquels sont reliés par au moins une vis de serrage (4) ou tout autre élément d'ajustement semblable afin de resserrer la manchette de raccordement (1).

5. Raccord de tuyau selon l'une des revendications 1 à 4, **caractérisé en ce qu'**au moins un des axes de liaison (3, 3', 3") opposés et conjugués l'un par rapport à l'autre présente un élément de fixation (10).

6. Raccord de tuyau selon l'une des revendications 1 à 5, **caractérisé en ce que** la manchette de raccordement (1) est conçue comme une bande de serrage.

7. Raccord de tuyau selon l'un des revendications 1 à 5, **caractérisé en ce que** la manchette de raccordement est constituée d'au moins une chaîne à articulations ou une chaîne à maillons, laquelle comprend des maillons, lesquels sont reliés ensemble par les axes de liaison (3") conçus comme des tourillons de chaîne.

8. Raccord de tuyau selon la revendication 7, **caractérisé en ce que** l'une au moins des chaînes à articulations est conçue comme une chaîna dentée.

9. Raccord de tuyau selon la revendication 7 ou 8, **caractérisé en ce que** des mailles (14) de l'une au moins des chaînes à articulations dentées servent d'éléments de fixation (10) et pour ce faire sont conçus comme des griffes de fixation (9), au moins par sections, au niveau leur zone de délimitation tournée vers la circonférence du tuyau.

10. Raccord de tuyau selon l'une des revendications 7 à 9, **caractérisé en ce que** la manchette de raccordement (1) est constituée d'au moins deux chaînes à articulations reliés entre elles à un certain intervalle.

11. Raccord de tuyau selon l'une des revendications 7 à 10, **caractérisé en ce que** les axes de liaison (3") servant de tourillons de l'une au moins des chaînes à articulations présentent au niveau de la circonférence des tourillons de cette dernière une griffe de fixation orientée notamment dans le sens de la circonférence.

12. Raccord de tuyau selon l'une des revendications 7 à 11, **caractérisé en ce que** les éléments de fixation (10) sont conçus comme des cylindres de fixation (17) ou des disques de fixation dotés d'ouvertures de passage longitudinales et **en ce que** l'ouverture de passage de chaque cylindre (17) ou disque de fixation traverse un axe de liaison (3', 3") servant le cas échéant de tourillon de chaîne.

13. Raccord de tuyau selon la revendication 12, **caractérisé en ce que** les cylindres de fixation (17) présentent au moine une griffe de fixation (9) orientée notamment dans le sens de la circonférence.

14. Raccord de tuyau selon la revendication 12 ou 13, **caractérisé en ce que** les cylindres de fixation (17) présentent au moins deux griffes de fixation (9) séparées l'une de l'autre par un intervalle dans le sens longitudinal des cylindres.

15. Raccord de tuyau selon l'une des revendications 1 à 14, **caractérisé en ce que** les griffes de fixation (9) présentent une forme en arc de cercle ou convexe.

16. Raccord de tuyau selon l'une des revendications 1 à 14, **caractérisé en ce que** les griffes de fixation (9) possèdent un profil extérieur rond ou circulaire et sont tout particulièrement montées de façon rotative sur l'axe de liaison (3', 3") correspondant.

17. Raccord de tuyau selon l'une des revendications 1 à 16, **caractérisé en ce qu'**une manchette d'étanchéité est prévue entre les griffes de fixation (9) séparées l'une de l'autre par un intervalle dans le sens axial.

18. Raccord de tuyau selon la revendication 17, **caractérisé en ce que** la manchette d'étanchéité présente une garniture d'étanchéité (19) ainsi qu'au moins un élément d'étanchéité (20) enveloppé par la garniture d'étanchéité (19).

19. Raccord de tuyau selon l'une quelconque des revendications précédentes, **caractérisé en ce que** des griffes de fixations supplémentaires (90) sont prévues au niveau de la circonférence intérieure du collier de serrage de la manchette de raccordement (1) conçue comme une bande de serrage, et **en ce que** les griffes de fixation (9) des éléments de fixation (10) supportés par un axe de liaison (3) dépassent par rapport aux griffes de fixation supplémentaires (90) prévues à ce niveau de la circonférence intérieure du collier de serrage.

20. Raccord de tuyau selon l'une quelconque des revendications précédentes, **caractérisé en ce que** la manchette de raccordement (1) constituée par au moins une chaîne à articulations comprend au moins un premier point de jonction (2') avec deux premiers axes de liaison (3') agencés au niveau des extrémités opposées des manchettes et reliés par au moins une vis de serrage (4) ou tout autre élément d'ajustement semblable et **en ce que** la manchette de raccordement (1) présente entre ses maillons de chaîne des seconds points de jonction (2")supplémentaires avec chaque second axe de liaison (3") servant de tourillon de la chaîne et reliant les maillons de chaîne voisins.
